# EUROPEAN PATENT APPLICATION

(11) **EP 2 056 218 A2**
(43) Date of publication of application: **06.05.2009**
(21) Application number: 08167578.7
(22) Date of filing: 25.10.2008
(51) Int. Cl.: G06F 17/30

(54) **Non-word or non-number search**

(30) Priority: 30.10.2007 US 928911
(71) Applicant: Honeywell International Inc., Morristown, NJ 07962 (US)
(72) Inventor: Saugen, Jill M., Albuquerque, NM 87122 (US); Wright, George L., Corrales, NM 87048 (US)
(74) Representative: Buckley, Guy Julian

(57) **Abstract**

A system, method, and computer program product for performing a non-word or non-number search is provided. A search object designated by a user is stored. A user criterion selected by the user for the search object is registered. A search template representing the search object is constructed. The search template embodies a first determined value of the user criterion. The search template is associated with a stored template of a stored object, the stored template embodying a second determined value of the user criterion, by comparing the first determined value to the second determined value.

## Description

### TECHNICAL FIELD

The present invention generally relates to computers and, more particularly, to a non-word or non-number search using a computer system.

### BACKGROUND

A search engine is an information retrieval system designed to help find information stored on a computer system. Search engines help to minimize the time required to find information and the amount of information which must be consulted. The most popular form of a search engine is a Web search engine which searches for information on the public World Wide Web (WWW). Other types of search engines include enterprise search engines that search on intranets, desktop search engines, and mobile search engines.

Search engines provide an interface to a group of items that enables users to specify criteria about an item of interest and have the engine find the matching items within the group. In the most popular form of search, items are documents or web pages and the criteria are words or concepts that the documents may contain. Typically, a search engine searches for text or numbers matching a keyword(s) according to a particular syntax.

An image search engine is tailored for finding pictures, images, animations, or other objects. Image searching generally allows a user to look for images using keywords or search phrases to receive a set of thumbnail images, sorted by relevancy. A common misunderstanding of image search engines is that the technology is based on detecting image information. Instead however, image search engines operate similarly to other search engines using text and numbers. In particular, metadata associated with the image is indexed and stored in a large data repository. When a search query is performed, the image search engine looks up the indexed metadata, and queries are matched with the stored information. The results are presented in order of relevancy.

Because image searches do not use image information per se, the results from imaging searches may be inaccurate or incomplete. Additionally, it may be difficult for a user to characterize a particular aspect of a desired image using text such as keywords, numerical information or search phrases. Hence, there is a need for an image search which allows a user to search according to one or more aspects of the image itself.

### BRIEF SUMMARY

In one embodiment, and by way of example only, a method for performing a non-word or non-number search is provided. A search object designated by a user is stored. A user criterion selected by the user for the search object is registered. A search template representing the search object is constructed. The search template embodies a first determined value of the user criterion. The search template is associated with a stored template of a stored object, the stored template embodying a second determined value of the user criterion, by comparing the first determined value to the second determined value.

In another embodiment, again by way of example only, a system for performing a non-word or non-number search is provided. The system includes means for storing a search object designated by a user, means for registering a user criterion selected by the user for the search object, means for constructing a search template representing the search object, the search template embodying a first determined value of the user criterion, and means for associating the search template with a stored template of a stored object, the stored template embodying a second determined value of the user criterion, by comparing the first determined value to the second determined value.

In still another embodiment, again by way of example only, a computer program product for performing a non-word or non-number search is provided. The computer program product comprises a computer-readable storage medium having computer-readable program code portions stored therein. The computer-readable program code portions include a first executable portion for storing a search object designated by a user, a second executable portion for registering a user criterion selected by the user for the search object, a third executable portion for constructing a search template representing the search object, the search template embodying a first determined value of the user criterion, and a fourth executable portion for associating the search template with a stored template of a stored object, the stored template embodying a second determined value of the user criterion, by comparing the first determined value to the second determined value.

### BRIEF DESCRIPTION OF THE DRAWINGS

FIG. 1 is a functional block diagram of an exemplary computer system and computer network for performing a non-word or non-number search;

FIG. 2 is a schematic block diagram of various exemplary methodology for performing a non-word or non-number search;

FIG. 3 is a flow chart diagram of an exemplary method for configuring a computer system to perform a non-word or non-number search; and

FIG. 4 is a flow chart diagram of an exemplary method for performing a non-word or non-number search.

### DETAILED DESCRIPTION

The following detailed description is merely exemplary in nature and is not intended to limit the invention or the application and uses of the invention. Furthermore, there is no intention to be bound by any theory presented in the preceding background or the following detailed description.

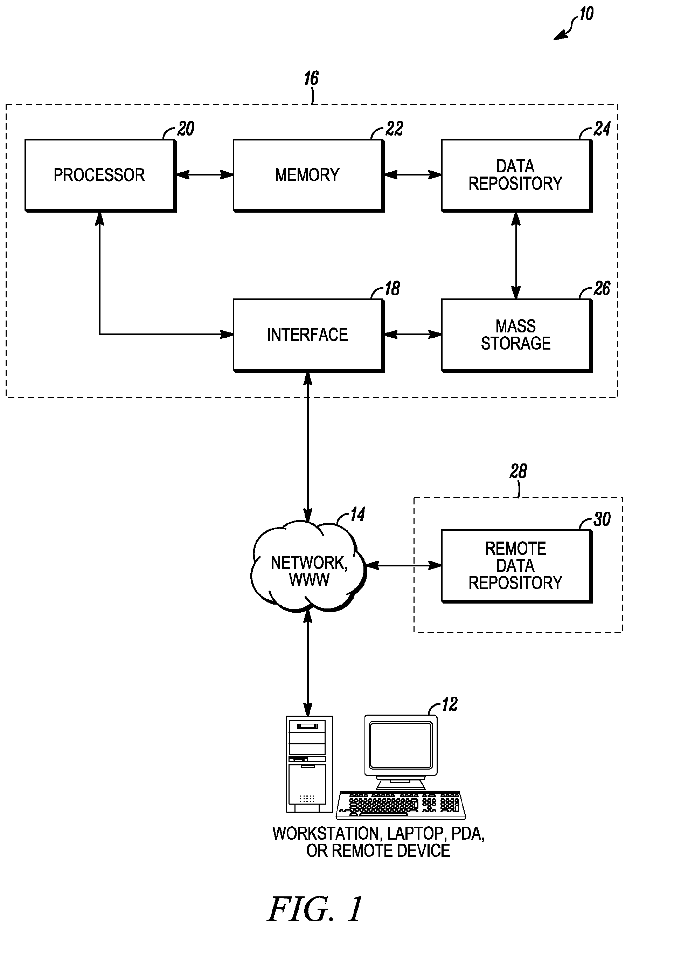

FIG. 1 is functional block diagram of an exemplary computer system 10 for performing a non-word or non-number search. Computer workstation 12, laptop 12, PDA 12, remote device 12, or a similar device is connected to a network 14. Network 14 can include an intranet, an extranet, and similar network connectivity to other computer devices such as the world wide web (WWW). A server 16 having a connection to network 14 includes an interface 18, a processor 20, memory 22, data repository 24, and mass storage 26. As one skilled in the art will appreciate, the components of server 16 may vary from application to application. In addition, more than one server 16, or the components thereof, may be connected to network 14 in a particular implementation. Data repository 24 may include one or multiple databases, locations, configurations, protocols, mediums, and the like.

A remote server 28 having a remote data repository 30 is also coupled to the network 14. Remote server 28 (as well as workstation 12) may also include such components as an interface 18, processor 20, memory 22, and mass storage 26 as one skilled in the art will appreciate. Such components are not illustrated for purposes of convenience. In addition, a number of remote servers 28 may be connected across the network 14. For example, a first remote server 28 may be located in a first location. A second remote server 28 may be located across network 14 in a second location, and so forth. Remote data repository 30 may also include a variety of databases, locations, configurations, protocols, mediums, etc.

Device 12 uses hardware, software, firmware, or a combination thereof to access network 14 and servers 16 and 28. A user, for example, may execute a web browser which executes software on the workstation and queries the servers 16 and/or 28 for information. In one embodiment, the workstation 12 may present search information such as returned objects to a user. The returned objects may be provided to the workstation 12 over the network 14 from server 16. Processor 20 may execute software to query data repository 24 and/or mass storage 26 for data, such as indexed data. The data may be read from mass storage device 26 and provided through interface 18 and network 14 to workstation 12 where it is displayed to the user as part of a graphical user interface (GUI) on a suitable display device such as a monitor.

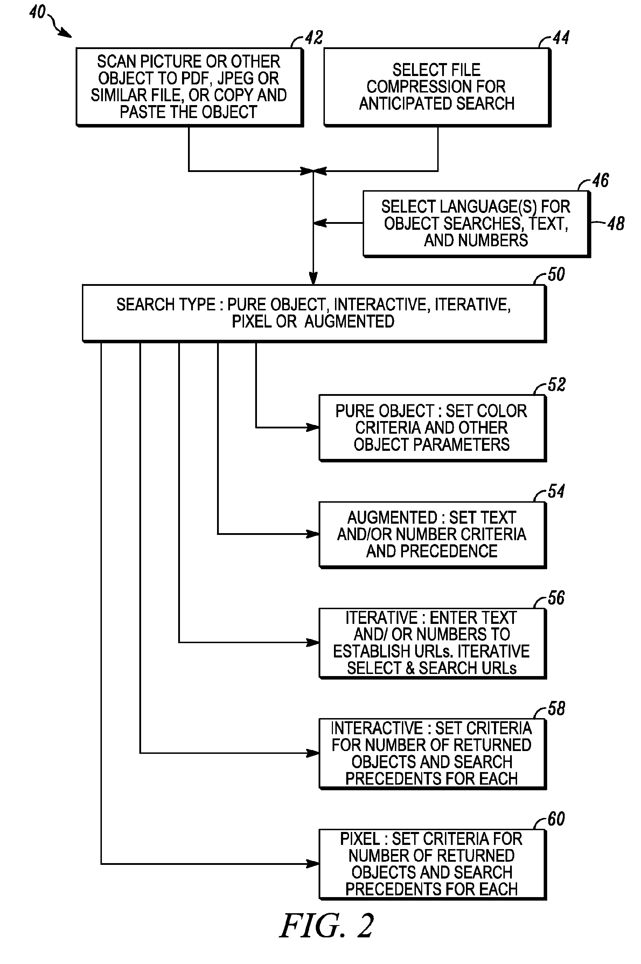

FIG. 2 is a schematic flow chart diagram of exemplary functionality 40 for performing a non-word or non-number search. Such functionality may be incorporated into hardware, software, or a combination of hardware and software operational on the computer system 10 (FIG. 1). In one embodiment, a user may begin an image search by designating an object, such as an image. In the present description, such an object will be referred to as a "search object." The image, or other object, may be scanned to a supported format such as Portable Document Format (PDF) or Joint Photographics Experts Group (JPEG) or other similar file extensions (block 42). The user may view the object on a GUI. The user may select the object, or a portion thereof. The object may then be copied and pasted into a search window of the search engine's GUI.

File compression algorithms may be employed to reduce object file sizes and minimize search times. The user may select a particular file compression algorithm for a particular search (block 44). Such a file compression algorithm may be applied to the search object to minimize the search object's file size as it is provided to the search.

The user may select a language in which the search engine may concentrate a particular query (block 46). For example, the user may designate a portion of an image that is commonly associated with the Arabic language. The selection of a particular language may be one of a number of criteria designated by a user when configuring the search engine to perform a search. Such "user criteria" will be described in detail throughout the present description.

Object search functionality may proceed according to varying search types depicted in block 50. Such search type functionality may be configured to be selectable by a user. In each search type, the search object designated by the user is compared in various ways to other objects, or to indexed data representing the other objects. These other objects that the user desires to return as the result of an object search may be stored locally, externally, over network 14 (FIG. 1) in a variety of locations. As a result, these objects will be referred to in the following description as "stored objects."

Examining the various search type functionality of block 50 further, the object search may be a pure object search (block 52). In such a pure object search various aspects of the search object may be compared with aspects of various stored objects. For example, a color user criterion may be set by a user. The color may be selected by a user or determined by software by examining a selected portion of the search object. Once the color is selected and inputted into the search engine, the search engine may compare the selected color of the search object with colors associated with stored objects to identify similarities.

As will be further described, user criteria may be quantified by numerical (or other quantifiable) values using such tools as mathematical algorithms. Such values may be termed "determined values." A search object or a stored object may be processed through mathematical algorithms to generate determined values of a specific user criterion. These determined values may be indexed in a data repository such as a relational data repository. For example, a search object may be processed through a mathematical algorithm which generates a determined value(s) representative of a specific color or colors. In this way, a template may be constructed that embodies one or more user criterion. Such a template may be referred to as a "search template."

A stored object may also be passed through the mathematical algorithm to generate determined values representative of the user criterion of the stored object. In a similar manner to the construction of a search template, a template may be constructed that embodies one or more user criteria. The resulting template may be referred to as a "stored template" for the stored object. An unlimited number of such stored templates may be constructed, stored and indexed according to various user criteria.

The search functionality may associate the search object template with a particular stored template by comparing the determined value(s) of the search object with the determined value(s) of the stored object. The search engine functionality may perform this associating function without regard to or irrespective of a native language associated with the stored object. As a result, the search functionality can search across languages of host sites, for example.

In one embodiment, the search engine may assess the determined value(s) of the search object and the determined value(s) of the stored object to identify whether the determined values are within a predetermined range. If the determined values are within the range, then the particular stored object may be identified as similar to the search object and returned to the user.

To illustrate, consider a search object used for a purely objective search involving a specific color. The search object is passed through an algorithm which generates the numerical value 2391. The search engine then may query a local or remote data repository to identify stored objects having numerical values within a predetermined range of 20. As a result, if a stored object has a color value of 2380, it will be identified by the search engine as being related in color.

For a pure object search, a specific color or a color scheme may be a user criterion. For an augmented search, a text keyword or phrase may be a user criterion. As will be further illustrated, user criterion may also include uniform resource locators (URLs), numerical data, pixel data, or other data associated with the object.

Returning to FIG. 2, the object search may proceed according to an augmented search type (block 54). For example, the object search may use an augmented text search system. Text such as keywords or phrases may be inputted by the user. Such text may be referred to as "search text." The object search may initially function similarly to traditional image search engines known in the art by retrieving a series of thumbnail images by initially comparing the search text with text associated with the stored object such as indexed text information or metadata. Such associated text may be referred to as "embedded text". Once a series of objects is initially returned, the user may then leverage object search functionality such as pure object searching to narrow down the series of objects.

The image search may be iterative in nature (block 56). For example, a user may input certain text or numerical data to return candidate URLs to be used to initiate object searches. As described previously, such URLs can be thought of as user criteria. Returned candidate URLs may then be selectable by a user. In a similar manner to augmented searching, an iterative image search may precede an image search of another search type. For example, a user may initiate an iterative image search using text or numerical data. The text or numerical data may be used to return a number of selectable candidate URLs to search further using other search functionality.

A user may use the search engine functionality interactively (block 58). For example, the user may initially specify the number of returned objects and related search criteria for a search object. The object search may then proceed using one or more of the search functionality. The system may then return the number of returned objects and query the user for a follow up activity. Such a follow up activity may include additional searches using various search functionality to narrow down a series of returned objects.

Various characteristics associated with pixels of an object may be user criteria for specific pixel search functionality (block 60). A search object may be processed through algorithms to generate determined values reflecting pixel characteristics of the object. For example, a search object may be characterized by a certain amount of pixels, a certain color of pixels, an amount of pixels of a certain color, pixels in a certain location, and so forth. Such pixel characteristics may be quantified in determined values and embodied in a search template as previously described.

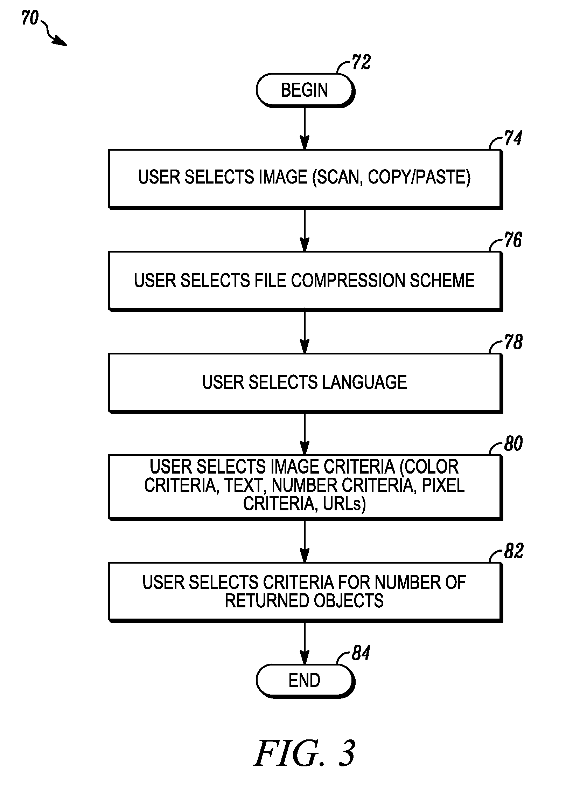

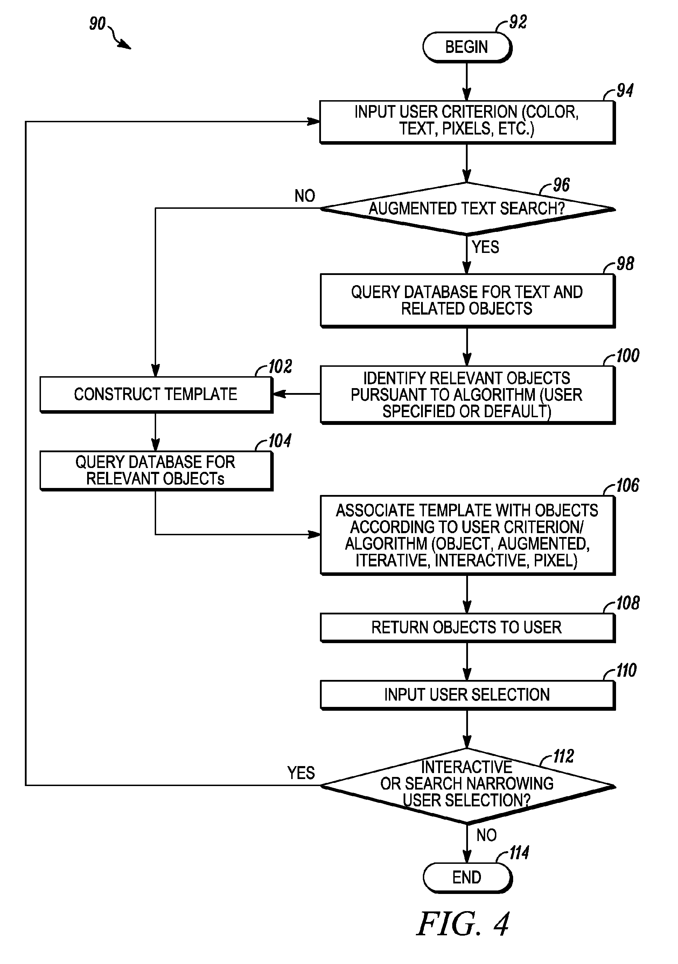

FIGs. 3 and 4 illustrate exemplary methods for configuring and performing non-word or non-number searching. As one skilled in the art will appreciate, various steps in the following methods may be implemented in differing ways to suit a particular application. The various steps may be performed in differing orders. In addition, the described methods may be implemented by various means, such as hardware, software, firmware, or a combination thereof operational on or otherwise associated with the storage environment. For example, the methods may be implemented, partially or wholly, as a computer program product including a computer-readable storage medium having computer-readable program code portions stored therein. The computer-readable storage medium may include disk drives, flash memory, digital versatile discs (DVDs), compact discs (CDs), and other types of storage mediums.

Turning to FIG. 3, an exemplary method 70 for initially configuring a system for performing non-word or non-number search functionality is depicted. Method 70 begins (step 72) by the user designating a search object, such as an image (step 74). The user may select all of, or a portion of the image using tools and techniques known in the art, such as copying and pasting, scanning, and the like. The search object may be placed in a search window of the search engine GUI. The search object is then stored in preparation for the creation of a search template representing the search object.

In the depicted embodiment, the user then selects an appropriate file compression scheme (step 76) to be applied to the search object to reduce the search object's size. The user then selects a search language in which the search engine will focus (step 78). The user then selects one or more user criteria, such as color text, number, pixel, URL or other user criteria (step 80) as previously described. The user then selects criteria for the number of returned objects (step 82). Method 70 then ends (step 84).

FIG. 4 illustrates an exemplary method 90 for performing a non-word or non-number search using a computer system as previously described in accordance with the previously described methodology. The method begins (step 92) by the user inputting a user criterion (step 94). Again, such criterion may include color, text, pixel or other criteria. As a next step, decision 96 queries whether the instant search is an augmented text search. The user may be presented with such a choice and opt to select the augmented text search as a search option. If so, the method stores the search text inputted by the user relating to the search object, and queries a local or remote data repository for embedded text relating to the search object (step 98). The method 90 then identifies relevant objects pursuant to an algorithm. The algorithm may be configurable by a user. For example, a user may designate a particular query syntax such as natural language search functionality which is reflected in the text search algorithm. In one embodiment, the user may then select all, or a portion of, the identified objects to search further using various object search functionality seen in FIG. 3.

A search template is constructed for the search object (step 102). Again, such a search template may include one or more user criterion that reflects various characteristics about the search object, such as pixel information. A local or remote data repository is then queried for relevant matching search objects (step 104). The local or remote data repository may store data, such as indexes relating to various search object templates. The stored template data may be stored in other locations accessible via the network.

The method 90 associates the search template with one or more stored templates of one or more stored objects (step 106). The search engine may compare determined values of each template to determine whether the values are within a predetermined threshold. The search engine may use other techniques to compare the search template with the search object(s). For example, the user may designate directed search functionality that restricts the search to known potential repositories of information, such as specific domains. Specific domains may be identified by the user to be included or excluded in the resulting search.

As described previously, the search engine may implement one or more types of search functionality such as pure object or iterative. The search engine, in the case of an augmented search pursuant to steps 98 and 100, may apply additional object search functionality to one or more returned objects from the initial text or numerical search. In other embodiments, such augmented search functionality may be performed where an object search is conducted first, and a text search is conducted subsequent to the object search to narrow the search results. Steps 104 and 106 may occur sequentially or simultaneously.

Once a stored template is identified pursuant to the search functionality, its associated stored object is then returned to the user (step 108). Here again, the search engine may apply a file compression algorithm to all or a portion of the returned object to minimize required bandwidth. One or more returned objects may be thus presented to a user, the user then having an opportunity to select the images or pursue additional search functionality. Such a user selection is then inputted (step 110). If the respective search functionality is interactive or otherwise search narrowing (decision 112), the method 90 returns to step 94 to continue performing one or more steps as previously described.

Consider the following example. In a first search, a color user criterion is chosen and a non-augmented search is performed. The search engine may return a first set of images to the user. The user may interactively select to discard the images and pursue an additional user criterion, or combine user criteria in a subsequent search. The user selects to retain a number of selected images, while performing an additional, augmented text search using certain color and pixel user criteria. A follow up set of images are thus returned to the user. The user may select an image (stored object) to perform an additional search. A search template may be constructed on the selected image. The selected image's search template may be compared with the search template of the original search object to develop additional user criteria, and so forth.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention.

## Claims

1. A method for performing a non-word or non-number search, comprising:
storing a search object designated by a user;
registering a user criterion selected by the user for the search object;
constructing a search template representing the search object, the search template embodying a first determined value of the user criterion; and
associating the search template with a stored template of a stored object, the stored template embodying a second determined value of the user criterion, by comparing the first determined value to the second determined value.

2. The method of claim 1, further including associating the search template with a plurality of additional stored templates of a plurality of additional stored objects by comparing the first determined value to a plurality of determined values.

3. The method of claim 2, further including returning a selectable number of stored objects to the user.

4. The method of claim 3, wherein returning a selectable number of stored objects to the user includes selectively implementing a compression algorithm for the number of stored objects.

5. The method of claim 1, wherein associating the search template with a stored template of a stored object includes querying a local data repository to obtain a stored object having a second determined value within a predetermined range of the first determined value.

6. The method of claim 1, wherein associating the search template with a stored template of a stored object includes querying a remote data repository to obtain a stored object having a second determined value within a predetermined range of the first determined value.

7. The method of claim 1, further including:
storing search text inputted by the user relating to the search object, and
associating the search text with the stored object by comparing embedded text associated with the stored object with the search text.

8. The method of claim 7, wherein storing search text inputted by the user relating to the search object includes selecting a search language for the embedded text.

9. The method of claim 1, wherein the user criterion includes at least one of a color, design, uniform resource locator (URL), or pixel criterion.

10. The method of claim 1, wherein storing a search object designated by the user includes selectively implementing a compression algorithm for the search object.
